(19) Europäisches Patentamt
European Patent Office
Office européen des brevets

(11) **EP 3 118 016 A1**

(12) **EUROPEAN PATENT APPLICATION**

(43) Date of publication:
**18.01.2017 Bulletin 2017/03**

(51) Int Cl.:
**B60B 15/24** *(2006.01)* **B60B 15/02** *(2006.01)*

(21) Application number: **16388003.2**

(22) Date of filing: **12.07.2016**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br>Designated Validation States:<br>**MA MD**<br><br>(30) Priority: **15.07.2015 DK 201500410** | (71) Applicant: **Steffensen, Jorgen**<br>**3390 Hundested (DK)**<br><br>(72) Inventor: **Steffensen, Jorgen**<br>**3390 Hundested (DK)**<br><br>(74) Representative: **Weinrich, Søren Gert**<br>**SGW Patent IVS**<br>**Hybenhaven 7**<br>**3060 Espergærde (DK)** |

(54) **WHEEL ACCESSORY AND WHEEL FOR SELF-PROPELLED LAWN MOWER**

(57) The invention relates to a wheel accessory for a self-propelled lawn mower, the wheel accessory comprising a radially resilient tubular member (2) configured to be attachable to the outer circumferential contact surface of a propelling wheel of a gardening implement such as a lawn mower, where the tubular member (2) on its outer circumferential surface (10) is provided with a plurality of outwardly extending grip-enhancing elements (3, 15, 16, 17) formed to penetrate the surface of a terrain beneath the mower, thereby improving the grip between the propelling wheel of the mower and the terrain beneath the mower and preventing the wheel from slipping on the surface of the terrain. In an embodiment of the invention the tubular member (2) is provided with a gap (4) extending longitudinally through the member, thereby defining a first and a second end portion of the tubular member, where the first and second end portions are provided with tightening means (5, 6, 7) for tightening the tubular member to the outer circumferential contact surface of the wheel. In an embodiment the grip-enhancing elements (3) are formed as generally rectangular elements having first and second end surfaces (18, 19), first and second side surfaces (20, 21) and a top surface (22), where the grip-enhancing elements extend a distance L outwardly from the outer circumferential surface (10) of the tubular member (2).

**Fig. 1**

EP 3 118 016 A1

## Description

### TECHNICAL FIELD

The present invention relates generally to the field of self-propelled lawn mowers, more particularly to the propelling wheels of such lawn mowers and still more particularly to wheel accessories configured to improve the grip between the propelling wheels and the terrain underneath the mower.

### BACKGROUND OF THE INVENTION

A conventional self-propelled lawn mower comprises propelling wheels that have a relatively soft grip between the wheel and the surface of the terrain underneath the lawn mower. If the mower is sufficiently heavy, a sufficient grip may be established between the driving wheels of the mower and the terrain below, but even in the case of a heavy mower the grip may occasionally be lost, for instance when driving over a wet lawn or driving up-hill.

Many self-propelled lawn mowers are intentionally relatively light weight and this increases the risk of the grip between the mower propelling wheels and the terrain below being lost, in which case the propelling wheels will slip and rotate relative to the surface of the underlying terrain.

When the grip between the propelling wheels and the underlying ground is lost, the user has to push the mower across the lawn, which may be cumbersome and annoying.

This problem is naturally further increased if the mower moves up-hill and the problem becomes more pronounced the steeper the slope of the lawn. Depending on the specific user, it may even be impossible to push the mower upwards on a steeply sloping lawn.

The majority of self-propelled lawn mowers on the market today are propelled by the front wheels of the mower. As many such mowers are also equipped with a collecting receptacle for cut-off grass at the rear part of the mower the problem of the propelling front wheels loosing grip with the surface underneath the mower becomes more and more pronounced, as the collecting receptacle during operation of the mower gradually becomes filled with cut-off grass, whereby the center of gravity is gradually shifted rearwards, i.e. away from the propelling front wheels.

### OBJECTIVE OF THE PRESENT INVENTION

On the above background it is an objective of the present invention to provide a solution to the above problem, which solution can preferably be obtained by a slight modification of an existing mower, a modification that any user can easily and quickly carry out in practice, without having to dismantle portions - such as one or more wheels - of the mower.

### DISCLOSURE OF THE INVENTION

The above and further objectives and advantages are provided by the combination of technical features defined in the independent claims. A number of non-limiting embodiments of the invention are defined in the respective dependent claims.

According to a first aspect of the present invention there is provided a wheel accessory for a self-propelled lawn mower, the accessory comprising a radially resilient tubular member configured to be attachable to the outer circumferential contact surface of a propelling wheel of a gardening implement such as a lawn mower, where the tubular member on its outer circumferential surface is provided with a plurality of outwardly extending grip enhancing elements formed to penetrate the surface of a terrain beneath the mower, thereby improving the grip between the driving wheel of the mower and the terrain beneath the mower and preventing the wheel from slipping on the surface of the terrain.

Throughout the present specification, the term "outer circumferential contact surface" of a propelling wheel is the surface of the propelling wheel of the mower that will be in contact with the terrain beneath the mower during normal operation hereof, when the propelling wheels of the mower is not provided with a wheel accessory according to the present invention.

In an embodiment of the first aspect the tubular member is provided with a gap extending longitudinally through the member, thereby defining a first and a second end portion of the tubular member, where the first and second end portions are provided with tightening means for tightening the tubular member to the outer circumferential contact surface of the propelling wheel of the mower.

In an embodiment of the first aspect the tubular member is along the circumferential edge portions of the tubular member provided with radially inwardly extending protrusions configured to maintain the tubular member in place on the outer circumferential contact surface of the wheel.

In an embodiment of the first aspect the grip enhancing elements are provided with aerating means configured for aerating a lawn in the same operation as mowing the lawn.

In an embodiment of the first aspect the grip-enhancing elements are formed as generally rectangular elements having first and second end surfaces in the direction of rotation of the tubular member, when this is mounted on a wheel of a mower moving over a terrain, first and second side surfaces and a top surface, where the grip-enhancing elements extend a distance L outwardly from the outer circumferential surface of the tubular member.

In an embodiment of the first aspect, the grip-enhancing elements are formed as elements having first and second end surfaces, first and second side surfaces and a top surface, where the grip-enhancing elements extend a distance L outwardly from the outer circumferential surface of the tubular member.

In an embodiment of the first aspect, the first and second surfaces of the grip-enhancing elements are substantially rectangular.

In an embodiment of the first aspect, the top surface is curved, for instance substantially in the shape of a section of a circle or ellipse.

In an embodiment of the first aspect, the grip-enhancing elements extend laterally, i.e. in the direction of the longitudinal axis X of the wheel accessory.

In an embodiment of the first aspect, the grip-enhancing elements extend over substantially the entire lateral extension ("the breadth" of the wheel accessory).

In an embodiment of the first aspect, the tubular member is made of a material that is radially resilient, whereby the diameter of the tubular member can be extended to such a degree that the tubular member can be provided on the propelling wheel and released from the propelling wheel.

In an embodiment of the first aspect, the tubular member is on at least one sector of its circumference made of a material, or provided with such extendable means, that the diameter of the tubular member can be extended to such a degree that the tubular member can be provided on the propelling wheel and released from the propelling wheel.

In an embodiment of the first aspect the grip-enhancing elements extend radially from the outer circumferential surface of the tubular member, i.e. at an angle with the tangential plane of the surface of substantially 90 degrees.

In an embodiment of the first aspect the first and second end surfaces of the grip-enhancing elements extend in parallel with the longitudinal axis X of the tubular member.

In an embodiment of the first aspect the first and second surfaces of the grip-enhancing elements extend at an angle between zero and 90 degrees relative to the longitudinal axis X of the tubular member.

According to the invention it is important that the top surface of the grip-enhancing elements, i.e. the surface of the grip-enhancing elements that during operation of the mower is brought into contact with the surface of terrain beneath the mower, is formed such that it actually penetrates through the surface of the terrain. This is accomplished by making the contact area, i.e. the area of the top surface of the grip-enhancing elements sufficiently small to ensure that the grip-enhancing elements can actually penetrate the surface of the terrain.

In an embodiment of the first aspect, the thickness of the rectangular elements (i.e. their circumferential extension) is much less than the other dimensions of the rectangular elements. More specifically, the thickness of the elements at the top surface of the elements is in the range substantially zero to 10 mm and still more specifically, the thickness at the top surface. of the elements is in the range substantially zero to 5 mm. If the thickness is substantially zero, the top surface reduces to a sharply pointed top edge portion, which may be optimal in some cases, although a sharp top edge portion will inevitably tend to wear off over time depending on the material of the grip-enhancing elements.

In an embodiment of the first aspect the grip-enhancing elements are formed as shovel-formed elements.

In an embodiment of the first aspect, the shovel-formed elements are provided on the outer circumferential surface of the tubular member with the opening of the shovel in the direction of rotation of the wheel accessory when this is mounted on a wheel of a mower during operation of the mower.

In an embodiment of the first aspect the grip-enhancing elements are formed as cones with the apex of the cone facing away for the outer circumferential surface of the tubular member.

In an embodiment of the first aspect the grip-enhancing elements are formed as elements having first and second end surfaces, first and second side surfaces and a top surface, where the grip-enhancing elements extend a distance L outwardly from the outer circumferential surface of the tubular member and where the first and second end surfaces are substantially triangular with a base that either extend over substantially the entire lateral extension of the tubular member ("the breadth" of the wheel accessory), or over less than the lateral extension of the tubular member, and a height of the triangle equal to L.

In most prior art self-propelled lawn mowers, the propelling wheels are the front wheels, but self-propelled lawn mowers may alternatively be provided with propelling rear wheels or even with all wheels being propelling.

Depending on the position of the propelling wheels, turning the mower (for instance from a first to a second direction 180 degrees relative to the first direction) may be impeded to some extend by the presence of the grip-enhancing elements. This undesired effect may be counteracted by a proper choice of the grip-enhancing elements. Thus, for instance, if turning the mower provided with the wheel accessory according to the first aspect of the invention is not considered a problem by the user, it may be preferable for instance to apply the substantially rectangular grip-enhancing elements described above, whereas, if the user experiences problems with turning the mower, it may be advantageous to apply a wheel accessory according to the first aspect of the invention with grip-enhancing elements of another shape, for instance the triangular or cone shaped elements mentioned above. According to the principles of the invention, it is easy for the user to replace one wheel accessory with another to solve the problem of turning the mower.

In an embodiment of the first aspect the lowest number N*min* of grip-enhancing elements is given be the expression:

$$Nmin = \frac{\pi}{Arccos(\frac{D}{D+L})}$$

where D is the outer diameter of the tubular member and L is the distance which the grip-enhancing element extends outwardly from the outer circumferential surface of the tubular member.

In practice, the number of grip-enhancing elements should not be excessively large as the pressure from the mower on the grip-enhancing elements in this would be distributed over a number of these elements with a risk of the elements not being able to penetrate the surface of the terrain. If the number of grip-enhancing elements were too large they would merely act as an extension of the effective diameter of the wheel.

In an embodiment of the first aspect the number N of grip-enhancing elements is given be the expression:

$$Nmin < N < 2Nmin$$

In an embodiment of the first aspect one or more aerating elements are mounted for outward extension from the tubular member to a distance from the outer circumferential surface of the tubular member that is sufficient to reach the roots of the grass on the lawn when the mower is moving over the lawn.

In an embodiment of the first aspect the one or more aerating elements can be changed between an active position, where they can penetrate the surface beneath the mower when the mower is moving over the lawn, and an inactive position, where the outward extension of the aerating elements from the outer circumferential surface of the tubular member is less than the outward extension of the grip-enhancing elements.

If during operation the user of a mower upon the propelling wheels of which the wheel accessory according to the invention is mounted retains the mower from moving over the terrain beneath the mower while the propelling wheels are still running, the grip enhancing means may be forced to dig into the ground beneath the mover and may hence cause damage to the lawn. In order to prevent this, an embodiment of the wheel accessory or wheel according to the invention is provided with a clutch mechanism that enables the grip-enhancing means to rotate with a rotational speed that differs from that of the propelling wheel. According to this embodiment, the rotational speed of the grip-enhancing elements may even be reduced to zero, while the propelling wheel is still rotating with a rotational speed different from zero.

The clutch mechanism may for instance be a frictional clutch, but other types of clutch mechanisms may also be used and would fall within the scope of the present invention.

In an embodiment of the first aspect, the wheel accessory comprises a frictional clutch configured such that the tubular member can rotate with a rotational speed Rd that differs from the rotational speed Rw of the propelling wheel, where the rotational speed Rd of the tubular member may be equal to zero.

In an embodiment of the first aspect, the frictional clutch comprises an inner tubular member configured for fixed attachment to the outer circumferential surface of a propelling wheel such that the inner tubular member during operation rotates with the propelling wheel, and where the outer circumferential surface of the inner tubular member forms a frictional contact with the inner circumferential surface of the tubular member.

In an embodiment of the first aspect, the tubular member is not provided with a gap extending longitudinally through the member configured for tightening the tubular member to the outer circumferential contact surface of the propelling wheel of the mower. Instead, according to this embodiment of the wheel accessory according to the invention, the tubular member is made of a radially expandable/contractible material as described above in connection with the clutch mechanism according to an embodiment of the invention. For instance, the tubular member could be made of a suitable rubber or plastic material that would provide the necessary radial resiliency to allow the tubular member to be expanded slightly and then pushed onto the outer circumferential surface of the propelling wheel.

According to a second aspect of the present invention there is provided a wheel for a self-propelled lawn mower, where the wheel on its outer circumferential contact surface is provided with a plurality of outwardly extending grip-enhancing elements formed to penetrate the surface of a terrain beneath the mower, thereby improving the grip between the driving wheel(s) of the mower and the terrain beneath the mower and preventing the driving wheel(s) from slipping on surface of the terrain, where the wheel comprises at least Nmin grip-enhancing elements, where Nmin is given by the expression:

$$Nmin = \frac{\pi}{Arccos(\frac{D}{D+L})}$$

where D is the outer diameter of the wheel and L is the distance which the grip-enhancing elements extends outwardly from the outer circumferential contact surface of the wheel.

In an embodiment of the second aspect the number N of grip-enhancing elements is given be the expression:

$$Nmin < N < 2Nmin$$

In an embodiment of the second aspect the grip-enhancing elements are formed as having first and second end surfaces, first and second side surfaces and a top surface, where the grip-enhancing elements extend a distance L outwardly from the outer circumferential contact surface of the wheel.

In an embodiment of the second aspect, the grip-enhancing elements have substantially rectangular first and second end surfaces.

In an embodiment of the second aspect the grip-enhancing elements extend radially from the outer circumferential contact surface of the wheel, i.e. at an angle with the tangential plane of the outer circumferential contact surface of the wheel of substantially 90 degrees.

In an embodiment of the second aspect the first and second end surfaces of the grip-enhancing elements extend in parallel with the longitudinal axis $X_w$ of the wheel.

In an embodiment of the second aspect the first and second end surfaces of the grip-enhancing elements extend in parallel with the longitudinal axis X of the tubular member.

In an embodiment of the second aspect the first and second surfaces of the grip-enhancing elements extend at an angle between zero and 90 degrees relative to the longitudinal axis X of the tubular member.

In an embodiment of the second aspect, the thickness $t_g$ of the rectangular elements (i.e. their circumferential extension) is much less than the other dimensions of the rectangular elements. More specifically, the thickness of the elements at the top surface of the elements is in the range substantially zero to 10 mm and still more specifically, the thickness at the top surface of the elements is in the range substantially zero to 5 mm. If the thickness is substantially zero, the top surface reduces to a sharply pointed top edge portion, which may be optimal in some cases, although a sharp top edge portion will inevitably tend to wear off over time depending on the material of the grip-enhancing elements.

In an embodiment of the second aspect the grip-enhancing elements are formed as shovel-formed elements.

In an embodiment of the second aspect the shovel-formed elements are provided on the outer circumferential contact surface of the wheel with the opening of the shovel in the direction of rotation of the wheel during operation of the mower.

In an embodiment of the second aspect the grip-enhancing elements are formed as cones with the apex of the cone facing away for the outer circumferential contact surface of the wheel.

In an embodiment of the second aspect a clutch mechanism as described above is incorporated in the wheel. The clutch mechanism in this embodiment may be a frictional clutch, where the outer circumferential surface of the wheel itself serves as one of the frictional contact surfaces of the clutch mechanism and where a tubular member provided with grip-enhancing elements is positioned with its inner circumferential surface in contact with the outer circumferential surface of the wheel. The friction between these two surfaces provides the clutch effect as described above.

It is understood that all features described above in connection with the first aspect of the invention (different geometrical configurations of the grip-enhancing elements, the presence of aerating elements, clutch mechanisms, etc.) can also be incorporated in the second aspect of the invention.

According to a third aspect of the present invention there is provided a lawn mower comprising one or more driving wheels according to the second aspect of the invention.

According to a fourth aspect the present invention relates to the use of a wheel accessory or a wheel as described above for improving propelling of a self-propelled lawn mower or other gardening equipment.

Although the number, shape and dimensions of the grip enhancing elements can be chosen as deemed required it should be noted that it is important for a correct function of the invention that at least one of the grip enhancing elements should always be in contact with the surface beneath the mover during operation.

## BRIEF DESCRIPTION OF THE DRAWINGS

Further benefits and advantages of the present invention will become apparent after reading the detailed description of non-limiting exemplary embodiments of the invention in conjunction with the accompanying drawings, wherein:

Figure 1 shows a schematic plane view of a first embodiment of a wheel accessory according to the present invention;

Figure 2 shows a schematic perspective view of the first embodiment of a wheel accessory shown in figure 1;

Figure 3(a) to 3(c) show schematic views of different grip enhancing elements according to the invention;

Figure 4(a) and 4(b) show a second embodiment of a wheel accessory according to the invention;

Figure 5(a) shows a schematic plane view of a second embodiment of a wheel accessory according to the invention, where the wheel accessory is provided with aerating means configured to aerate a lawn while moving the mower over the surface of the lawn;

Figure 5(b) shows a schematic side view of the embodiment shown in figure 4(a);

Figure 5(c) shows a schematic plane view of the embodiment shown in figure 4(a) and 4(b) with the aerating means brought into an inactive position;

Figure 6 shows a schematic perspective view of an embodiment of grip-enhancing elements according to the invention;

Figure 7 shows a schematic plane view of a third embodiment of a wheel accessory according to the invention comprising a frictional clutch mechanism;

Figure 8 shows a schematic perspective view of an embodiment with triangular grip-enhancing elements according to the invention; and

Figure 9 shows an embodiment of a wheel accessory according to the invention where the tubular member 31 is made of a radially resilient material and hence not provided with a gap and tightening means as for instance shown in figure 2.

## DETAILED DESCRIPTION OF THE INVENTION

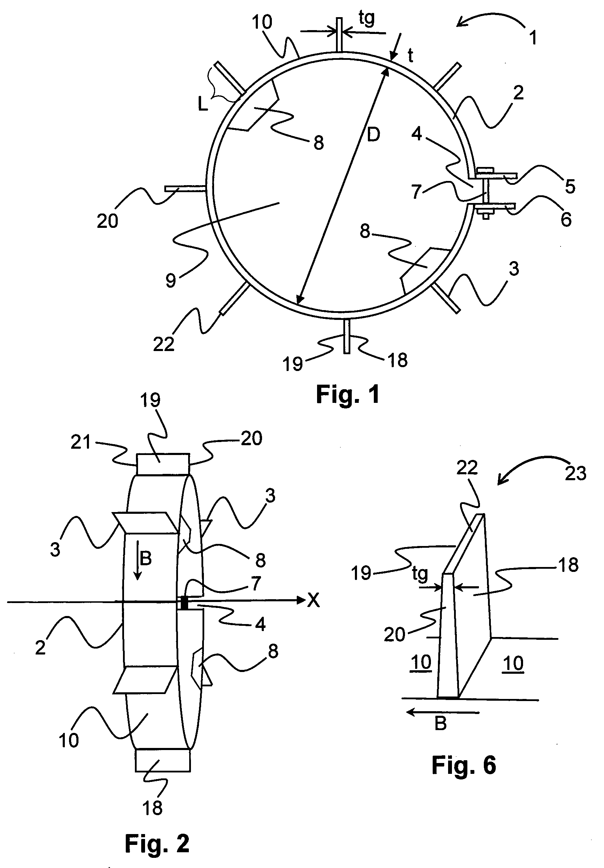

Referring to figure 1 and 2 there is shown a wheel accessory according to an embodiment of the present invention. The wheel accessory is generally indicated by reference numeral 1 and comprises a tubular member 2 having a longitudinal axis X (c.f. figure 2). The tubular member 2 defines an inner space 9 configured to accommodate a wheel (not shown). The tubular member 2 has a relatively thin wall of a thickness t that is much less than the diameter D of the tubular member.

The tubular member can be made of any suitable material that ensure the radial resiliency required to fit the tubular member on the outer circumferential contact surface of the specific wheel.

On the outer circumferential surface 10 of the tubular member 2 there is provided a plurality of outwardly extending grip-enhancing elements 3 formed to penetrate the surface of a terrain beneath the mower when this moves over the terrain, thereby improving the grip between the driving wheel(s) of the mower and the terrain beneath the mower and preventing the wheel from slipping on the terrain. Both the length L of the grip-enhancing elements 3 and their shape can vary inter alia according to varying needs of the user of the mower. Examples of different embodiments of the grip-enhancing elements are given below.

In the embodiment shown in figure 1 and 2, the tubular member 2 is provided with a longitudinal slit 4 that enables the diameter D of the tubular member 2 to be varied and hence fitted to the outer diameter of a wheel. The embodiment shown in figure 1 is provided with a very simple fastening arrangement consisting of opposite flanges 5 and 6 at the tubular member on either side of the slit 4 and a bolt 7 passed through holes provided in the respective flanges 5, 6. In an embodiment, the flanges 5, 6 may be similar to and be a part of the grip-enhancing elements 3. A person skilled in the art could envisage a number of other fastening arrangements, and all such arrangements would fall within the scope of the present invention as defined by the claims.

In the embodiment shown in figure 1 and 2, a total of seven grip-enhancing elements 3 are provided plus those two that consist of the flanges 5, 6. It is however understood that the number of such elements could be chosen differently and that all such numbers of grip-enhancing elements 3 would also be covered by the patent claims. In the disclosure of the invention some guidelines for an appropriate choice of the number of grip-enhancing elements were given. The grip-enhancing elements 3 comprises end surfaces 18 and 19 extending in the circumferential direction of the tubular member 2, side surfaces 20, 21 and a top surface 22 that during operation of the mower penetrates the surface of the terrain beneath the mower.

In a practical implementation of the wheel accessory according to the invention, the diameter D of the wheel was 19.5 cm and 12 grip-enhancing elements were used. The length L of these elements were 1.75 cm. Using the expressions given in the disclosure of the invention, the minimum number of grip-enhancing elements would in this case be Nmin = 8 and the actual number of grip-enhancing elements should be between 8 and 16. Thus, as choice of 12 grip-enhancing elements would seem appropriate, which in fact was determined to be correct in practice. As mentioned in the disclosure of the invention, the thickness tg of the rectangularly shaped grip-enhancing elements must be chosen sufficiently small to ensure that the top surface 22 can actually penetrate the surface of the terrain.

In the embodiment shown in figure 1 and 2, the thickness tg of the rectangular elements (i.e. their circumferential extension) is much less than the other dimensions of the rectangular elements. As mentioned, the thickness tg is preferably in the range zero to 10 mm (although a thickness outside this range is not excluded from the scope of protection). In the above described practical implementation, the thickness tg is uniform throughout the radial extension of the grip-enhancing elements 3 and is approximately 3 mm.

As shown in figure 6, the grip-enhancing elements may also have a narrow triangular cross sectional shape in the circumferential direction, for instance with a relative large thickness tg at the interface between the tubular member and the grip-enhancing elements and less thickness tg towards the outer radial end of these elements.

In the embodiment shown in figure 1 and 2, the tubular member 2 is provided with retaining means 8 that prevent the wheel accessory 1 from undergoing axial displacement on the wheel and eventually lose contact with the wheel all together. Also the number and shape of these retaining means 8 could be chosen differently and all such numbers and shapes of the retaining means 8 would also be covered by the patent claims.

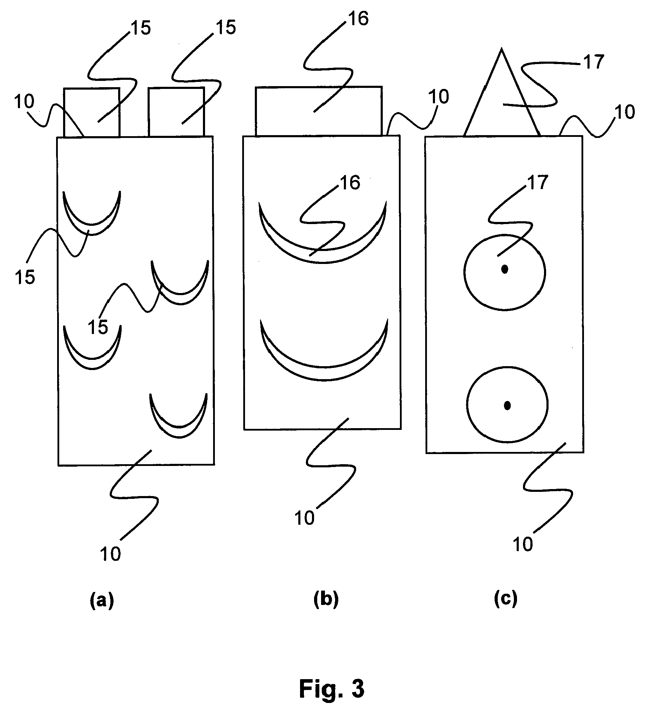

Referring to figure 3 there is shown schematic views of different grip-enhancing elements according to the invention, but it is understood that these are only non-limiting examples of such elements that may be used according to the invention, and that a person skilled in the art may conceive other grip enhancing elements that would also fall within the scope of the present invention.

In figure 3(a) there is shown a first alternative to the grip-enhancing elements 3 shown in figures 1 and 2. On the outer circumferential surface 10 of the tubular member 2 there is provided two angularly shifted rows of half-moon shaped elements 15 that act somewhat like shovels when driven into the surface of the terrain below the mower. The dimensions and curvatures of these shovel members can be varied as desired.

In figure 3(b) there is shown a second alternative to the grip-enhancing elements 3 shown in figures 1 and 2. Like in the first alternative shown in figure 3(a) a number of shovel formed elements 16 are provided on the outer circumferential surface 10 of the tubular member 2, but only a single row of these elements is provided.

In figure 3(c) there is shown a third alternative to the grip-enhancing elements 3 shown in figures 1 and 2. In this alternative, the grip-enhancing elements are shaped as conical protrusions 17 extending radially from the outer circumferential surface 10 of the tubular member 2. It is of cause possible to apply more than one row (as in figure 3(a)) of conical elements, if desired, and also to change the exact geometrical configuration of the conical elements.

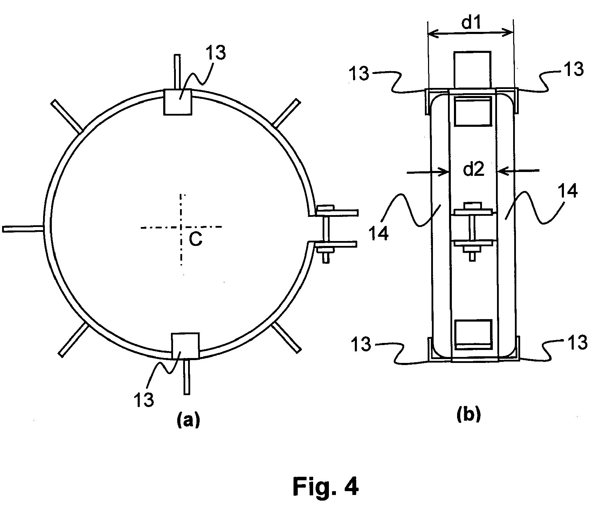

Referring to figure 4(a) and 4(b) there is shown a second embodiment of the wheel accessory according to the invention. In this embodiment, the retaining means 13 are configured as angled brackets with a width d1 between the radially extending parts of the brackets substantially equal to the width of a wheel 14 around which the wheel accessory is placed. The exact number and layout of the retaining means could of cause be varied as required. The width d2 (or longitudinal extension) of the tubular member 2 is in this embodiment less than the width of the wheel.

In the following an embodiment of the invention are described where the wheel accessory according to the invention is supplemented with aerating means, such that aeration of a lawn may be carried out simultaneously with mowing the lawn. As aeration of a lawn is an operation that is more seldom carried out than the mowing of the lawn, the aeration means shown in the shown embodiment can easily be brought from an inactive to an active state without the user having to dismantle the wheel accessory from the wheel of the mower. In the embodiment shown and described below only two aerating members are provided on the wheel accessory, but it is understood that a larger number of such aerating means could - and probably should - be used in practice.

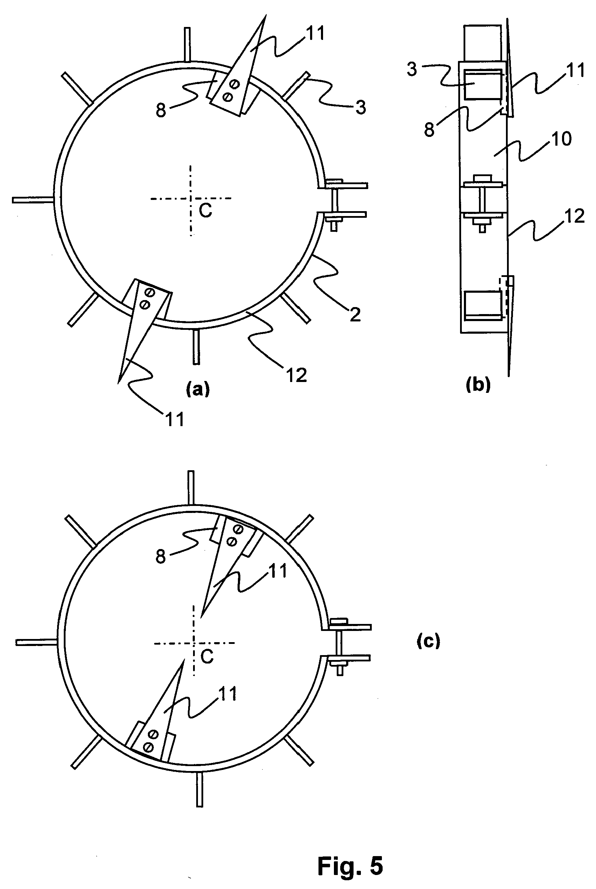

Referring to figure 5(a), 5(b) and 5(c) there is shown a third embodiment of the wheel accessory according to the invention. This embodiment comprises two aerating elements 11 mounted on the retaining means 8 such that the aerating elements 11 can be turned from an active position as shown in figure 5(a) where they extend radially outwardly from the tubular member 2 and to an inactive position as shown in figure 5(c), where they extend radially inwardly towards the center C of the tubular member 2. As it appears from figure 5(b), the aerating elements 11 are mounted adjacent one edge portion 12 of the tubular member 2.

Referring to figure 6 there is shown a schematic perspective view of an embodiment of grip-enhancing elements 23 according to the invention. As in the case of the grip-enhancing elements 3 shown in figure 1 and 2, the grip-enhancing elements shown in figure 6 have rectangular end surfaces 18, 19 and a top surface 22. The side surfaces 20, 21, however, are trapezoidally shaped such that the thickness tg of the element 23 is largest at the interface between the element 23 and the outer circumferential surface 10 of the tubular member 2 and becomes gradually less towards the top surface 22. At the limit the thickness tg at the top surface 22 may be substantially zero, resulting in the element 23 obtaining a sharp edge region instead of the top surface 22. The end surfaces substantially faces in and away from the direction of motion B of the tubular member or wheel of the mower, when the mower moves over the terrain.

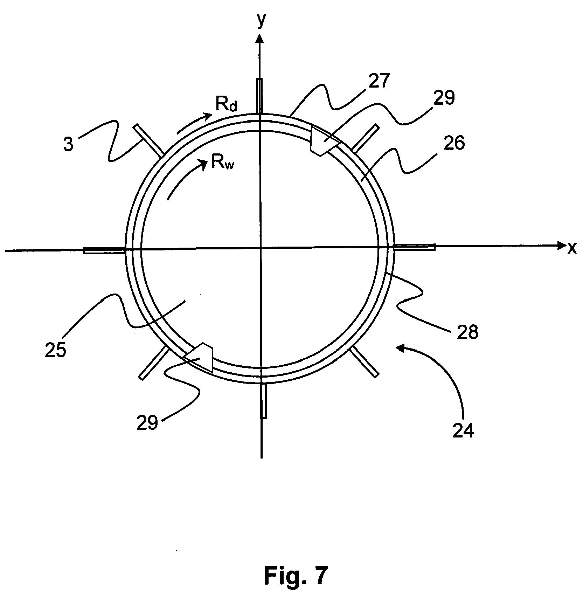

Referring to figure 7 there is shown a schematic plane view of a third embodiment 24 of a wheel accessory according to the invention comprising a frictional clutch mechanism..

The frictional clutch mechanism according to this embodiment comprises an inner tubular member 26 that is configured such that it can be fixedly mounted on the outer circumferential surface of a propelling wheel 25. The inner tubular member con for instance be made of a radially resilient material such that it can be pushed laterally onto the outer circumferential surface of the propelling wheel 25. This material may also in an embodiment provide the necessary friction in the clutch mechanism. On the outer circumferential surface 28 of the inner tubular member 26 there is provided an outer tubular member 27 that is provided with the outwardly extending grip-enhancing elements 3. The outer tubular member 27 may be provided with retaining means 29 corresponding to the means 8 in figure 1.

Although not shown in figure 7, the outer tubular member 27 may be provided with a fastening arrangement corresponding to that indicated by reference numerals 5, 6 and 7 in figure 1 and a gab in the tubular member 2 as indicated by reference numeral 4 in figure 1. In an alternative embodiment, the outer tubular member 27 in figure 7 may be made of a suitable radially resilient material that allows it to be placed on the inner tubular member 26 with a frictional contact face 28 being established between the inner tubular member 26 and the outer tubular member 27.

The clutch mechanism as exemplified in figure 7 is configured such that the outer tubular member 27 can rotate with a rotational speed Rd that differs from the rotational speed Rw of the propelling wheel 25. The rotational speed Rd of the outer tubular member 27 may specifically be equal to zero.

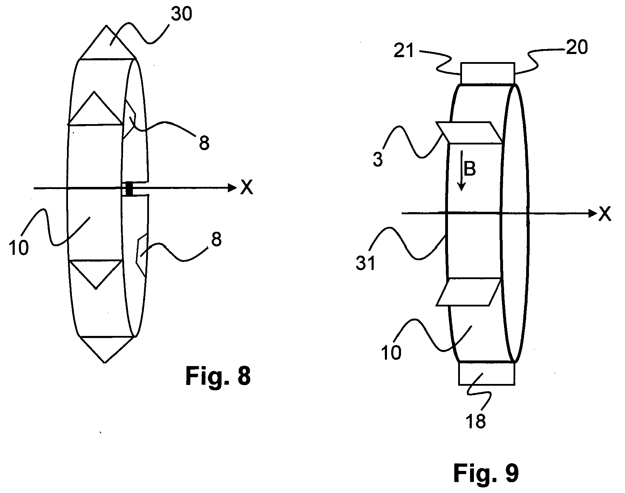

Referring to figure 8 there is shown an embodiment of a wheel accessory according to the invention provided with triangular grip-enhancing elements 30 on the outer circumferential surface 10 of the wheel accessory. In the shown embodiment, the grip-enhancing elements 30 extend over the entire breadth of the wheel accessory, but it is understood that they may alternatively extend over only a part of the breadth of the wheel accessory.

Referring to figure 9 there is shown an embodiment of the wheel accessory according to the invention, where the tubular member 31 is made of a radially resilient material and hence not provided with a slit and correspondingly tightening means as shown in the previous embodiments. In the embodiment shown in figure 9, the tubular member 31 could for instance be made of a suitable rubber material, although other materials may also be used.

It should be appreciated that reference throughout this specification to "one embodiment" or "an embodiment" or "an aspect" or features included as "may" means that a particular feature, structure or characteristic described in connection with the embodiment is included in at least one embodiment of the disclosure. Furthermore, the particular features, structures or characteristics may be combined as suitable in one or more embodiments of the disclosure. The previous description is provided to enable any person skilled in the art to practice the various aspects described herein. Various modifications to these aspects will be readily apparent to those skilled in the art, and the generic principles defined herein may be applied to other aspects.

The claims are not intended to be limited to the aspects shown herein, but is to be accorded the full scope consistent with the language of the claims, wherein reference to an element in the singular is not intended to mean "one and only one" unless specifically so stated, but rather "one or more." Unless specifically stated otherwise, the term "some" refers to one or more.

Although the invention has been explained in relation to the embodiments described above, it is to be understood that many other possible modifications and variations can be made without departing from the scope of the present invention. It is, therefore, contemplated that the appended claim or claims will cover such modifications and variations that fall within the true scope of the invention.

**Claims**

1. A wheel accessory for a self-propelled lawn mower, the wheel accessory comprising a radially resilient tubular member (2) configured to be attachable to the outer circumferential contact surface of a propelling wheel of a gardening implement such as a lawn mower, where the tubular member (2) on its outer circumferential surface (10) is provided with a plurality of outwardly extending grip-enhancing elements (3, 15, 16, 17) formed to penetrate the surface of a terrain beneath the mower, thereby improving the grip between the propelling wheel of the mower and the terrain beneath the mower and preventing the wheel from slipping on the surface of the terrain.

2. A wheel accessory according to claim 1, where the tubular member (2) is provided with a gap (4) extending longitudinally through the member, thereby defining a first and a second end portion of the tubular member, where the first and second end portions are provided with tightening means (5, 6, 7) for tightening the tubular member to the outer circumferential contact surface of the propelling wheel of the mower.

3. A wheel accessory according to claim 1 or 2, where the grip-enhancing elements (3) are formed as elements having first and second end surfaces (18, 19), first and second side surfaces (20, 21) and a top surface (22), where the grip-enhancing elements extend a distance L outwardly from the outer circumferential surface (10) of the tubular member (2).

4. A wheel accessory according to claim 3, where said first and second end surfaces (18, 19) of said grip-enhancing elements (3) are substantially rectangular or triangular with the apex of the triangle pointing radially outward from the wheel accessory.

5. A wheel accessory according to claim 1, where said tubular member (2) is made of a material that is radially resilient, whereby the diameter of the tubular member (2) can be extended to such a degree that the tubular member can be provided on said propelling wheel and released from said propelling wheel.

6. A wheel accessory according to claim 3, 4 or 5, wherein said grip-enhancing elements (3) extend laterally, i.e. in the direction of the longitudinal axis X of the wheel accessory, over substantially the entire lateral extension, i.e. in the direction of the longitudinal axis X of the wheel accessory,

7. A wheel accessory according to any of the preceding claims, where the grip-enhancing elements (3) extend radially from the outer circumferential surface (10) of the tubular member (2), i.e. at an angle with the tangential plane of the surface (10) of substantially 90 degrees.

8. A wheel accessory according to any of the preceding claims, where the first and second end surfaces (18, 19) extend in parallel with the longitudinal axis X of the tubular member (2).

**9.** A wheel accessory according to any of the preceding claims, where the lowest number N*min* of grip-enhancing elements (3, 15, 16, 17) is given be the expression:

$$Nmin = \frac{\pi}{Arccos(\frac{D}{D+L})}$$

where D is the outer diameter of the tubular member (2) and L is the distance which the grip-enhancing element extends outwardly from the outer circumferential surface (10) of the tubular member (2); and where the actual number N of grip-enhancing elements (3, 15, 16, 17) on the tubular member (2) is given be the expression:

$$Nmin < N < 2Nmin$$

**10.** A wheel accessory according to any of the preceding claims, where one or more aerating elements (11) are mounted for outward extension from the tubular member (2) to a distance from the outer circumferential surface (10) of the tubular member (2) that is sufficient to reach the roots of the grass on the lawn when the mower is moving over the lawn.

**11.** A wheel accessory according to any of the preceding claims comprising a frictional clutch configured such that said tubular member (2) can rotate with a rotational speed (Rd) that differs from the rotational speed (Rw) of the propelling wheel (25), where the rotational speed (Rd) of the tubular member (2) may be equal to zero.

**12.** A wheel accessory according to claim 11, where said frictional clutch comprises an inner tubular member (26) configured for fixed attachment to the outer circumferential surface of a propelling wheel (25) such that the inner tubular member (26) during operation rotates with the propelling wheel (25), and where the outer circumferential surface (28) of the inner tubular member (26) forms a frictional contact with the inner circumferential surface of the tubular member (2).

**13.** A wheel for a self-propelled lawn mower, where the wheel on its outer circumferential contact surface is provided with a plurality of outwardly extending grip-enhancing elements formed to penetrate the surface of a terrain beneath the mower, thereby improving the grip between the driving wheel(s) of the mower and the terrain beneath the mower and preventing the driving wheel(s) from slipping on surface of the terrain, where the wheel comprises at least Nmin grip-enhancing elements, where Nmin is given by the expression:

$$Nmin = \frac{\pi}{Arccos(\frac{D}{D+L})}$$

where D is the outer diameter of the wheel and L is the distance which the grip-enhancing elements (3, 15, 16, 17) extends outwardly from the outer circumferential contact surface of the wheel, and where the number N of grip-enhancing elements (3, 15, 16, 17) is given be the expression:

$$Nmin < N < 2Nmin$$

**14.** A wheel according to claim 13, comprising grip-enhancing elements (3) according to any of the preceding claims 1 to 12 provided on the outer circumferential contact surface Cw of the wheel.

**15.** The use of a wheel accessory according to any of the preceding claims 1 to 12 for improving propelling of a self-propelled lawn mower.

**Fig. 8**

**Fig. 9**

**Fig. 7**

**Fig. 3**

**Fig. 4**

**Fig. 5**

**Fig. 1**

**Fig. 2**

**Fig. 6**

Europäisches
Patentamt

European
Patent Office

Office européen
des brevets

# EUROPEAN SEARCH REPORT

Application Number

EP 16 38 8003

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/096268 A1 (KOHLER JOSEPH E [US]) 11 May 2006 (2006-05-11) | 1-9, 13-15 | INV. B60B15/24 |
| Y | * paragraphs [0050] - [0058]; figures 1-3 | 10 | |
| A | * | 11,12 | ADD. B60B15/02 |
| | ----- | | |
| X | US 1 600 871 A (FERREIRA EMANUEL D) 21 September 1926 (1926-09-21) * page 1, line 47 - page 2, line 3; figures 1-5 * | 1-5,7,8, 15 | |
| | ----- | | |
| X | CH 83 414 A (TRACTEURS BLANC & PAICHE SA D [CH]) 16 April 1920 (1920-04-16) * column 1, line 17 - column 2, line 5; figures 1, 2 * | 1-4,6-8, 15 | |
| | ----- | | |
| X | WO 2007/146910 A2 (BOWMAN TIMOTHY [US]) 21 December 2007 (2007-12-21) | 1,2,7, 10,15 | |
| Y | * page 4, line 12 - page 9, line 15; figures 6-9 * | 10 | |
| | ----- | | |

TECHNICAL FIELDS
SEARCHED (IPC)

B60B

The present search report has been drawn up for all claims

| Place of search | Date of completion of the search | Examiner |
|---|---|---|
| Munich | 30 November 2016 | Schreck, Mathias |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 38 8003

This annex lists the patent family members relating to the patent documents cited in the above-mentioned European search report.
The members are as contained in the European Patent Office EDP file on
The European Patent Office is in no way liable for these particulars which are merely given for the purpose of information.

30-11-2016

| Patent document cited in search report | Publication date | Patent family member(s) | Publication date |
|---|---|---|---|
| US 2006096268 A1 | 11-05-2006 | NONE | |
| US 1600871 A | 21-09-1926 | NONE | |
| CH 83414 A | 16-04-1920 | NONE | |
| WO 2007146910 A2 | 21-12-2007 | NONE | |

EPO FORM P0459

For more details about this annex : see Official Journal of the European Patent Office, No. 12/82